Europäisches Patentamt

European Patent Office

Office européen des brevets

(11) Numéro de publication: **0 465 310 B1**

(12) **FASCICULE DE BREVET EUROPEEN**

(45) Date de publication de fascicule du brevet: **26.10.94**  (51) Int. Cl.5: **C03B 37/05**

(21) Numéro de dépôt: **91401747.0**

(22) Date de dépôt: **27.06.91**

(54) **Procédé de formation de fibres minérales.**

(30) Priorité: **02.07.90 FR 9008315**

(43) Date de publication de la demande:
**08.01.92 Bulletin 92/02**

(45) Mention de la délivrance du brevet:
**26.10.94 Bulletin 94/43**

(84) Etats contractants désignés:
**AT BE CH DE DK ES FR GB IT LI NL SE**

(56) Documents cités:
**FR-A- 2 106 430**
**GB-A- 867 299**

(73) Titulaire: **ISOVER SAINT-GOBAIN**
**Les Miroirs**
**18, avenue d'Alsace**
**F-92400 Courbevoie (FR)**

(72) Inventeur: **Giboult, Alain**
**88, rue Pierre Curie**
**F-60290 Rantigny (FR)**
Inventeur: **Aube, Jean-Yves**
**5 bis, rue Marcel Duchemin**
**F-60600 Clermont (FR)**
Inventeur: **Sainte-Foi, Daniel**
**56 bis, rue Marcel Duchemin**
**F-60600 Clermont (FR)**

(74) Mandataire: **Menes, Catherine et al**
**SAINT-GOBAIN RECHERCHE 39, Ouai Lucien**
**Lefranc**
**F-93300 Aubervilliers (FR)**

**Description**

L'invention a trait aux techniques de production de laine de roche destinée par exemple à servir de matière de base à des produits isolants thermiques et/ou acoustiques. Plus précisément, l'invention concerne un perfectionnement à la technique de fibrage d'une matière étirable à haut point de fusion, par exemple du type verre basaltique, laitiers de hauts fourneaux ou autres matériaux équivalents, selon laquelle la matière à fibrer est déversée à l'état fondu sur la bande périphérique de roues de centrifugation mues en rotation, est accélérée par ces roues, s'en détache et est transformée pour partie en fibres sous l'effet de la force centrifuge, un courant gazeux ayant une direction essentiellement parallèle aux axes de rotation des roues et émis à la bande périphérique des roues entraînant les fibres ainsi formées vers une réception et les séparant de la matière infibrée.

La technique de fibrage ci-dessus brièvement évoquée, connue par exemple des demandes de brevets européens EP-A-59 152 et 195 725, est dite exclusivement à centrifugation libre, ce qui rappelle à la fois que le verre fondu n'est pas divisé en une série de filets élémentaires (centrifugation interne) ni soumis à un étirage gazeux par un courant d'air à température et vitesse élevées. Cette technique de fibrage déjà fort ancienne conduit à des rendements et une qualité des fibres produites généralement bien inférieurs à ce qui peut être obtenu selon d'autres techniques combinant éventuellement centrifugation et étirage gazeux, toutefois elle est pratiquement la seule à pouvoir être utilisée dans des conditions intéressantes du point de vue économique avec des matériaux comme des laitiers basaltiques qui se caractérisent par des températures de fusion bien plus élevées que les verres sodo-calciques usuels, une courbe viscosité-température à très forte pente et une tendance à la dévitrification extrêmement rapide qui impose de travailler dans un domaine de température très étroit.

Comme la centrifugation du verre fondu amène un refroidissement intense de celui-ci, on considère que dans cette technique de centrifugation libre, les fibres sont exclusivement formées dans un domaine délimité par la surface de la roue de centrifugation et une frange concentrique à une distance radiale de la périphérie de la roue d'environ 5-10 mm. L'étirage des fibres s'achevant dès que leur liaison est brisée avec la bande de verre fondu qui adhère à la roue, cette brisure se produit à une distance variant fortement d'une fibre à l'autre, ce qui explique qu'il est relativement difficile de définir précisément cette "frange".

Dans ce procédé de fibrage, les fibres sont transportées hors du voisinage immédiat de la machine de fibrage par un courant gazeux ayant une direction essentiellement parallèle aux axes de rotation des roues et émis à la périphérie des roues de centrifugation dans une direction essentiellement perpendiculaire à la direction radial d'émission des fibres. Selon l'art, ce courant est constitué par un courant d'air froid ou de fumées refroidies à une température voisine de la température ambiante, avec une vitesse moyenne de par exemple 100 m/s, cette température pouvant varier dans une assez large mesure d'une installation à l'autre. Une telle vitesse moyenne est en fait très inférieure à la vitesse de particules infibrées qui côtoient les fibres et qui sont elles dues à des gouttelettes de verre qui rebondissent après avoir été accélérées par la rotation des roues mais sans y adhérer de sorte qu'aucun étirage ne se produit ; l'accélération par les roues de centrifugation communique à ces particules infibrées une vitesse suffisante pour que le courant gazeux périphérique n'ait pas d'effet significatif sur la trajectoire de ces particules ce qui conduit à un tri d'avec les fibres qui sont par contre déviées en raison de leur moindre densité et moindre vélocité.

Dans d'autres procédés connus de fibrage de verre ou autre matériau équivalent, le courant gazeux périphérique est émis à d'autres fins : on peut tout d'abord chercher à amincir les fibres produites par le centrifugeur (dans ce cas on procède généralement par centrifugation interne ) ; le courant gazeux est alors émis par un brûleur à une température et une vitesse élevées, la température des gaz devant être bien supérieure au point de ramollissement du verre pour provoquer l'étirage des fibres (cf. US-A-2 577 204 ou US-A-2 949 632 par exemple). Un tel étirage à la flamme suppose toutefois que la matériau à étirer a une courbe viscosité-température à faible pente qui autorise de le travailler dans une plage de température relativement large, condition non remplie par les matériaux tels les verres basaltiques ou les laitiers de hauts fourneaux, comme indiqué précédemment. Par ailleurs un courant gazeux chaud d'étirage à la flamme est par définition plus coûteux qu'un courant d'air froid. Dans d'autre cas, on utilise un courant gazeux périphérique émis par une buse continue à une température relativement faible (vapeur ou air chauffé à environ 200°C) qui exerce une trempe très énergétique et uniforme des fibres ce qui a pour effet d'améliorer leur qualité mécanique (FR-A-1 169 358) ; notons que cet effet de trempe n'a pas de raison d'être avec des matériaux déjà refroidis en dessous de leur point de ramollissement par le simple effet de la centrifugation. Enfin il est connu de FR-A-2 298 518 et FR-A-2 211 408 un procédé selon lequel on cherche à casser des filaments continus au moyen d'un courant gazeux périphérique émis perpendiculairement à leur direction de formation, ledit courant étant à une température suffisamment basse pour ne pas provoquer d'étirage des filaments, normalement à une température voisine de l'ambiante inférieure à 150°C et de préférence à 65°C.

Dans toutes ces approches connues, le courant gazeux émis à la périphérie de l'organe de centrifugation est donc soit très chaud (avec des températures excédant typiquement 1000°C) soit froid (avec une température soit de l'ordre de l'ambiante soit de l'ordre de 150°C lorsque de la vapeur était utilisée - cas des installations les plus anciennes ne disposant pas de compresseur assez puissant).

A la différence de ces approches, les auteurs de la présente invention ont procédé dans une ambiance chaude, c'est-à-dire avec un courant gazeux dont la température est comprise entre 250 et 900°C, de préférence entre 300 et 600°C et de préférence encore autour de 500°C. En d'autres termes, l'invention propose un procédé de formation de fibres minérales dans lequel le matériau à fibrer est déversé à l'état fondu à la surface périphérique de la première d'une série de roues de centrifugation tournant à grande vitesse, y est essentiellement accéléré et est renvoyé sur la deuxième roue d'où une partie du matériau est transformé en fibres sous l'effet de la force centrifuge, la partie restante étant éventuellement renvoyée vers la roue suivante et ainsi de suite et dans lequel les fibres formées par les différentes roues de centrifugation sont prises en charge par un courant gazeux à vitesse élevée entourant la série de roues de centrifugation, émis à proximité immédiate desdites roues, dans une direction essentiellement parallèle aux axes de rotation des roues, caractérisé en ce que pour au moins une des roues de centrifugation, le courant gazeux est émis a une température comprise entre 250 et 900°C et de préférence entre 300 et 600°C.

De manière inattendue, il s'avère que cette seule mesure conduit à une amélioration très significative de la qualité des fibres produites par l'installation, avec notamment une plus grande finesse et par ailleurs un taux de grains plus faible (le terme "grains" étant utilisé pour désigner les particules supérieures à 100 microns qui se retrouvent dans le produit final).

Il apparaît ainsi qu'il est possible d'influencer l'étirage des fibres avec un courant gazeux dont la température est pourtant très éloignée de la température correspondant au point de ramollissement de la matière à fibrer ; un verre basaltique sort en effet de l'enceinte de fusion à une température par exemple supérieure à 1500°C, il ne saurait donc être question a priori d'un étirage gazeux avec des gaz à 500°C.

Très avantageusement, cette ambiance chaude peut être obtenue à un coût minime par l'exploitation des fumées de l'enceinte de fusion de la matière à fibrer, ces fumées n'étant généralement pas exploitées car trop "froides" pour justifier économiquement un recyclage des calories contenues.

Toutes choses égales par ailleurs, la laine de roche obtenue avec une ambiance chaude a une conductivité thermique plus faible que celle obtenue avec une ambiance froide à température ambiante. Les gains de résistivité thermique ainsi acquis équivalent par exemple à une augmentation de l'ordre de 20 % de la vitesse de rotation des roues de centrifugation ou à une augmentation de plus de 50°C de la température de la coulée de verre déversée sur la première des roues. Alors que l'ambiance chaude est très peu onéreuse, ces deux méthodes sont beaucoup moins intéressantes car elles entraînent une usure mécanique bien plus élevée et un coût énergétique très grand.

La vitesse des gaz du courant gazeux est de préférence supérieure à 50 m/s et de préférence encore à 100 m/s ce qui permet d'optimiser les conditions d'étirage des fibres. Par condition d'étirage, on entend ici la formation de zones tourbillonnaires qui vont aider à la séparation des fibres unitaires et limiter leur tendance à se regrouper en mèches, mèches qui se retrouvent à l'état de noeuds dans le produit final et nuisent à la résistance mécanique de celui-ci.

Cette influence des zones tourbillonnaires est probablement plus élevée quand on procède selon l'invention avec une ambiance chaude dont la physique des gaz apprend qu'elle a pour conséquence directe une énergie cinétique plus élevée du courant gazeux ambiant. A cette première hypothèse on peut également ajouter l'hypothèse d'un effet de dissipation visqueuse. Des études ont en effet montré que l'étirage d'une fibre provoque un dégagement important de chaleur en raison du travail de réarrangement de la structure visqueuse mais ce dégagement de chaleur est normalement insuffisant en lui-même pour entretenir les conditions de températures nécessaires à un étirage, compte-tenu par ailleurs de l'intense refroidissement subit par les fibres du fait de la centrifugation ; il n'est donc pas interdit de penser que l'ambiance chaude selon l'invention pourrait - de par le petit apport thermique ainsi apporté - suffire à l'obtention d'un phénomène pratiquement d'autoentretien des conditions d'étirage. De toute façon, il ne s'agit là que de quelques tentatives d'interprétation théorique d'un phénomène dans une large mesure encore inexpliqué et il n'en reste pas moins que l'ambiance chaude selon l'invention a incontestablement un effet favorable ce qui est du point de vue technique le seul point réellement d'importance.

Pour que l'influence de l'ambiance chaude sur les conditions de formation des fibres soit sensible, il est nécessaire que le courant gazeux soit émis à proximité immédiate des roues de centrifugation de préférence en les rasant. D'autre part, pour une canalisation parfaitement efficace des fibres, il est préférable que l'enveloppe du courant gazeux soit à une distance assez grande des roues. Le rapprochement de ces deux exigences sous-entend des débits d'air chauffé entre 250 et 900°C très élevés. Ces débits peuvent être fortement réduits, si on procède avec deux courants gazeux, un courant gazeux principal et un courant auxiliaire généré à distance des roues de centrifugation et ayant sensiblement la même direction que le courant gazeux rasant principal. Dans le cas, le courant gazeux auxiliaire n'est pas réchauffé ce qui permet un gain énergétique intéressant dans la mesure où de 30 à 50 % de tout le débit de gaz soufflé dans le dispositif peut l'être au moyen de ce courant gazeux auxiliaire.

Le procédé de fibrage selon l'invention peut être mis en oeuvre de manière très simple avec tout dispositif de fibrage de laine minérale par centrifugation libre. Comme les températures ici préconisées restent relativement basses, seules quelques précautions simples sont nécessaires, du type refroidissement de certaines pièces, étant entendu bien sûr que toutes les précautions habituellement prises en relation avec la température élevée du verre fondu doivent être maintenues.

Suivant les cas, notamment si la quantité de gaz chaud disponible est limitée, on peut prévoir un courant d'air chaud pour toutes ou seulement certaines des roues de centrifugation, notamment celles situées en dernier sur le trajet du matériau. Il peut être aussi avantageux de préchauffer un peu plus le courant destiné aux dernières roues alimentées en verre relativement plus froid.

De manière préférée, on utilise un dispositif conforme à celui décrit dans la demande de brevet européen EP-A-0 439 385 au nom de la demanderesse, qui est publiée le 31.07.91 et de ce fait appartient à l'état de la technique visé à l'article 54, paragraphe 3 de la CBE. Ce dispositif comprend une série de roues de centrifugation disposées suivant un assemblage mettant leurs surfaces périphériques à proximité les unes des autres, animées en rotation rapide par des moteurs disposés de côté, à l'extérieur de l'ensemble constitué par la série des roues de centrifugation et entraînant lesdites roues au moyen d'organes de transmission mécanique disposés de manière à laisser un passage d'air au travers de la série de roues de centrifugation, deux roues consécutives sur le trajet du matériau à fibrer tournant en sens inverse, une alimentation en matériau fondu montée de façon à laisser se déverser ledit matériau sur la surface extérieure de la première roue de centrifugation, un premier organe de soufflage engendrant autour de la série de roues de centrifugation un courant gazeux chaud à une température comprise entre 250 et 900°C, parallèle aux axe de rotation desdites roues de centrifugation et un second organe de soufflage générant un courant gazeux auxiliaire froid, à distance des roues de centrifugation et sensiblement dans la même direction que le courant gazeux chaud.

D'autres détails et caractéristiques avantageuses de l'invention sont décrits ci-après en référence à la planche unique annexée qui représente :

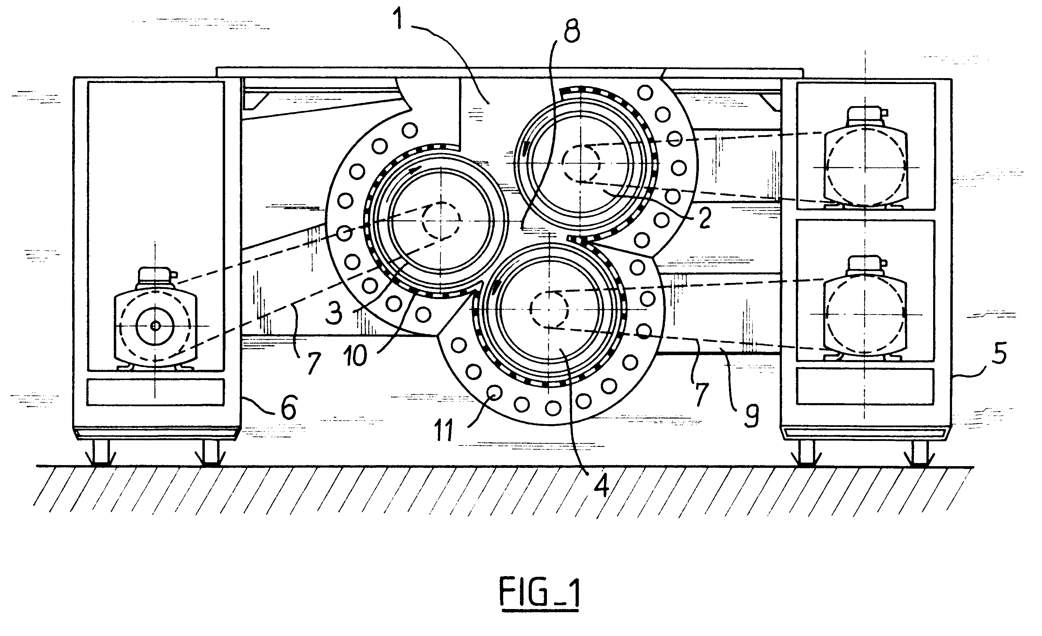

. **figure 1** : une vue de face d'un dispositif de fibrage par centrifugation externe comportant 3 roues de centrifugation.

La figure 1 est un schéma de face d'un dispositif de fibrage vu côté fibres et essentiellement conforme aux enseignements de la demande de brevet européen EP-A-0 439 385 précitée. Ce dispositif est constitué d'un ensemble 1 comportant 3 roues de centrifugation 2, 3, 4 disposées suivant un assemblage mettant leurs surfaces périphériques à proximité les unes des autres. Ces roues 2, 3, 4 sont mues en rotation au moyen de blocs-moteurs 5, 6 agissant par l'intermédiaire de courroies de transmission 7, les deux roues de droite sont entraînées par exemple dans le sens inverse des aiguilles d'une montre alors que la roue de gauche est entraînée en sens contraire, de sorte que deux roues consécutives sur le trajet du matériau à fibrer (qui descend de la plus haute roue 2 vers la plus basse 4) tournent en sens inverse.

La série de roues 2, 3, 4 est contournée par un organe de soufflage périphérique 10, constitué par une buse de soufflage continue, émettant un courant gazeux chaud essentiellement parallèle aux axes de rotation des roues de centrifugation, doublée par un ensemble de buses à gros diamètres 11 qui émettent des jets d'air froid également essentiellement parallèles au courant gazeux principal.

Par ailleurs, des moyens ici non représentés, sont prévus pour pulvériser une composition de liants sur les fibres formées.

Une installation de ce type avec 3 roues de 300 mm de diamètre a été utilisée pour différents essais différenciés par la température des gaz du courant principal. Le verre employé est un verre basaltique répondant à la formulation suivante (pourcentages pondéraux) :

| | |
|---|---|
| $SiO_2$ | 44,50 % |
| $Al_2O_3$ | 14,70 % |
| $Fe_2O_3$ | 12,50 % |
| CaO | 10,50 % |
| MgO | 8,90 % |
| $Na_2O$ | 4,25 % |
| $K_2O$ | 0,95 % |
| $TiO_2$ | 2,60 % |
| Divers | 1,10 % |

La viscosité de ce verre est de $10^2$, $10^{1,7}$ et $10^1$ dPas respectivement pour des températures de 1235, 1300 et 1483 °C. Il s'agit donc typiquement d'un verre dont la courbure viscosité-température est à très forte pente dans le domaine de viscosité convenant à un étirage en fibres. La coulée a été effectuée à 1540 °C, ce qui correspond sur la première roue de centrifugation à une température de 1280 °C contrôlée par un pyromètre optique, avec un débit de verre de 350 kg/heure.

On a utilisé comme gaz de soufflage 2400 $m^3$/h pour le courant principal (débit calculé à 20 °C) et 1000 $m^3$/h pour le courant auxiliaire froid.

A partir d'une telle installation, on a fait varier la température de l'air du courant principal, en choisissant une vitesse de rotation des roues de centrifugation de 6000 tours par minute. On a alors mesuré le "fasonaire" sous 5 grammes correspond aux différents échantillons de fibres ainsi produits, le fasonaire étant défini de façon normalisée comme le débit d'un courant gazeux émis dans des conditions bien définies et mesuré en faisant passer un échantillon comprimé de 5 grammes de fibres. Sans entrer plus précisément dans les détails, un échantillon est d'autant plus de meilleure qualité, c'est-à-dire d'autant plus isolant, que son fasonaire est grand.

Les résultats suivants ont été obtenus :

```
Température de soufflage :  25 °C   Fasonaire : 280
                        : 250 °C             : 300
                        : 500 °C             : 325
                        : 700 °C             : 335
```

Les fibres obtenues avec un courant gazeux chaud sont donc d'une qualité nettement améliorée par rapport aux fibres obtenues à température ambiante, même si le courant peut être considéré comme étant encore à une température relativement tiède par exemple de seulement 250 °C. Par ailleurs si on compare les valeurs obtenues à 500 et 700 °C, on constate un certain plafonnement des performances. Il existe donc un optimum autour de 500 °C, l'intérêt étant de travailler avec les températures les plus basses, donc les plus économiques mais suffisamment élevées pour l'obtention de l'amélioration de la qualité des fibres.

Le gain en fasonaire obtenu permet de fournir des produits finals ayant une masse volumique diminuée de 10 % par rapport à un produit de même pouvoir isolant obtenu lui avec un courant gazeux à température ambiante.

Le gain est également sensible pour ce qui concerne le rendement total du procédé, le rendement procédé étant défini comme la masse de verre récupérée dans le produit final par rapport à la masse totale déversée sur la première roue de centrifugation. Un courant d'air à 500 °C permet d'améliorer le rendement d'environ 5 à 10 % ; gain d'autant plus appréciable que le taux de grains - c'est-à-dire le pourcentage de particules supérieures à 100 microns présentes dans le produit - a lui très légèrement tendance à diminuer ce qui signifie une amélioration de la qualité du produit.

**Revendications**

1.  Procédé de formation de fibres minérales dans lequel le matériau à fibrer est déversé à l'état fondu à la surface périphérique de la première (2) d'une série de roues de centrifugation (2, 3, 4) tournant à grande vitesse, y est essentiellement accéléré et est renvoyé sur la deuxième roue (3) d'où une partie du matériau est transformé en fibres sous l'effet de la force centrifuge, la partie restante étant éventuellement renvoyée vers la roue suivante (4) et ainsi de suite et dans lequel les fibres formées par les différentes roues de centrifugation sont prises en charge par un courant gazeux entourant la série de roues de centrifugation, émis à proximité immédiate desdites roues, dans une direction essentiellement parallèle aux axes de rotation des roues, **caractérisé en ce que** pour au moins une des roues de centrifugation, le courant gazeux est émis a une température comprise entre 250 et 900°C, de préférence entre 300 et 600°C et de préférence encore autour de 500°C.

2. Procédé de formation de fibres minérales selon la revendication 1, **caractérisé en ce que** le courant gazeux est émis à une vitesse supérieure à 50 m/s.

3. Procédé de formation de fibres minérales selon la revendication 2, **caractérisé en ce que** le courant gazeux est émis à une vitesse supérieure à 100 m/s.

4. Procédé de formation de fibres minérales selon l'une des revendications précédentes, **caractérisé en ce qu'**un courant auxiliaire à température ambiante est généré à distance des roues de centrifugation (2, 3, 4), ledit courant gazeux auxiliaire ayant sensiblement la même direction que le courant gazeux principal.

5. Procédé de formation de fibres minérales selon l'une des revendications précédentes, **caractérisé en ce que** ledit courant gazeux chaud est émis uniquement à la périphérie des roues (3, 4) situées en dernier sur le trajet du matériau à fibrer.

6. Procédé de formation de fibres minérales selon l'une des revendications 1 à 4, **caractérisé en ce que** la température dudit courant gazeux chaud est d'autant plus grande que ledit courant est émis à proximité d'une roue située plus en aval sur le trajet du matériau à fibrer.

7. Procédé de formation de fibres minérales selon l'une des revendications précédentes, **caractérisé en ce** le dit courant gazeux chaud est réchauffé par les fumées provenant de l'enceinte de fusion de la matière à fibrer.

## Claims

1. Method of forming mineral fibres in which the material to be drawn into fibres is poured in the molten state onto the peripheral surface of the first (2) of a set of centrifuging wheels (2, 3, 4) rotating at high speed, is substantially accelerated and is discharged onto the second wheel (3), where one part of the material is transformed into fibres under the effect of the centrifugal force, the remaining part optionally being discharged towards the succeeding wheel (4), and thus to the end, and in which the fibres formed by the various centrifuging wheels are taken up by a gaseous current surrounding the set of centrifuging wheels, emitted in the immediate proximity of the said wheels, in a direction substantially parallel to the axis of rotation of the wheels, characterised in that, for at least one of the centrifuging wheels, the gaseous current is emitted at a temperature of between 250 and 900°C, and preferably between 300 and 600°C, and is further preferably approximately 500°C.

2. Process of forming mineral fibres according to Claim 1, characterised in that the gaseous current is emitted at a speed greater than 50 m/s.

3. Method of forming mineral fibres according to Claim 2, characterised in that the gaseous current is emitted at a speed greater than 100 m/s.

4. Method of forming mineral fibres according to one of the preceding claims, characterised in that an auxiliary current at an ambient temperature is generated at a distance from the centrifuging wheels (2, 3, 4) the said auxiliary gaseous current being essentially in the same direction as the principle gaseous current.

5. Method of forming mineral fibres according to any one of the preceding claims, characterised in that the said hot gaseous current is emitted only at the periphery of the wheels (3, 4) located last of all on the path of travel of the material to be fibre drawn.

6. Method of forming mineral fibres according to any one of Claims 1 to 4, characterised in that the temperature of the said hot gaseous current is greater the closer the said current is emitted to a wheel which is located further downstream on the path of the material to be fibre drawn.

7. Method of forming mineral fibres according to one of the preceding claims, characterised in that the said hot gaseous current is reheated by the vapours from the furnace for melting the material to be fibre drawn.

**Patentansprüche**

1. Verfahren zur Bildung von Mineralfasern, bei dem das zu zerfasernde Material im geschmolzenen Zustand auf die Umfangsfläche des ersten Schleuderrades (2) einer Reihe von mit hoher Geschwindigkeit drehenden Schleuderrädern (2, 3, 4) gegossen, dort wesentlich beschleunigt und auf das zweite Rad (3) weiterbefördert wird, von wo ein Teil des Materials unter der Einwirkung der Fliehkraft in Fasern umgewandelt wird, wobei der Überschuß eventuell auf das nächstfolgende Rad (4) weiterbefördert wird usw., und bei dem die von den verschiedenen Schleuderrädern gebildeten Fasern von einem Gasstrom mit hoher Geschwindigkeit erfaßt werden, welcher die Reihe von Schleuderrädern umgibt und in unmittelbarer Nähe der Räder in einer im wesentlichen zu den Drehachsen der Räder parallelen Richtung abgegeben ist, **dadurch gekennzeichnet, daß** der Gasstrom für mindestens eines der Schleuderräder mit einer zwischen 250 und 900 °C und bevorzugt zwischen 300 und 600 °C und insbesondere bevorzugt um 500 °C liegenden Temperatur abgegeben wird.

2. Verfahren zur Bildung von Mineralfasern nach Anspruch 1, **dadurch gekennzeichnet, daß** der Gasstrom mit einer höheren Geschwindigkeit als 50 m/s abgegeben wird.

3. Verfahren zur Bildung von Mineralfasern nach Anspruch 2, **dadurch gekennzeichnet, daß** der Gasstrom mit einer höheren Geschwindigkeit als 100 m/s abgegeben wird.

4. Verfahren zur Bildung von Mineralfasern nach einem der vorstehenden Ansprüche, **dadurch gekennzeichnet, daß** ein Nebengasstrom mit Umgebungstemperatur im Abstand von den Schleuderrädern (2, 3, 4) erzeugt wird, wobei der Nebengasstrom in etwa der gleichen Richtung wie der Hauptgasstrom verläuft.

5. Verfahren zur Bildung von Mineralfasern nach einem der vorstehenden Ansprüche, **dadurch gekennzeichnet, daß** der warme Gasstrom nur an der Peripherie der in der Bahn des zu zerfasernden Materials zuletzt angeordneten Räder (3, 4) abgegeben wird.

6. Verfahren zur Bildung von Mineralfasern nach einem der Ansprüche 1 bis 4, **dadurch gekennzeichnet, daß** die Temperatur des warmen Gasstromes umso höher ist, je weiter ein Rad, in dessen Nähe der Strom abgegeben wird, stromauf in der Bahn des zu zerfasernden Materials angeordnet ist.

7. Verfahren zur Bildung von Mineralfasern nach einem der vorstehenden Ansprüche, **dadurch gekennzeichnet, daß** der warme Gasstrom durch die Rauchgase von dem Schmelzofen für das zu zerfasernde Material erwärmt wird.

FIG_1